## Europäisches Patentamt

## European Patent Office

## Office européen des brevets

(11) Publication number: **0 049 613**

**B1**

(12) **EUROPEAN PATENT SPECIFICATION**

(45) Date of publication of patent specification: **05.09.90**

(21) Application number: **81304563.0**

(22) Date of filing: **02.10.81**

(51) Int. Cl.⁵: **B 29 C 45/14,** B 05 D 3/00, B 05 D 7/14, B 32 B 15/08, F 42 B 14/00

(54) **Method of bonding a plastics body to metal.**

(30) Priority: **03.10.80 US 193680**

(43) Date of publication of application: **14.04.82 Bulletin 82/15**

(45) Publication of the grant of the patent: **05.09.90 Bulletin 90/36**

(84) Designated Contracting States: **BE DE FR GB IT NL**

(56) References cited:
AU-B- 481 742
FR-A-1 508 851
GB-A-1 309 471
US-A-3 910 194
US-A-4 024 008

(73) Proprietor: **HONEYWELL INC. Honeywell Plaza Minneapolis Minnesota 55408 (US)**

(72) Inventor: **Hargreaves, Charles R. 3040 County Road 90 Maple Plain Minnesota 55359 (US)**
Inventor: **Price, Stephen J. 3327 Adair Avenue North Crystal Minnesota 55422 (US)**

(74) Representative: **Fox-Male, Nicholas Vincent Humbert Honeywell Control Systems Limited Charles Square Bracknell Berkshire RG12 1EB (GB)**

Courier Press, Leamington Spa, England.

## Description

This invention relates to a method of bonding a plastics body to metal, and is particularly applicable om the bonding of a polymer plastics body to the wall of a projectile.

Some modern day weapon systems including advanced high explosives incendiary projectiles require thin walls of high strength steel in order to meet system performance requirements. These projectiles also require a shallow annular recess or seat into which a polymer body must by firmly bonded.

Bonding a polymer body to a steel projectile so as to survive substantial environmental conditions followed by high stress during actual firing of the projectile has to our knowledge not been successfully achieved before. Among the factors which are involved are the chemical stability of the substrate, the mechanical bonding methods, thermal stresses caused by the environment, and chemical stability of the recess/projectile interface.

Various methods have been proposed in the prior art to accomplish the bonding of plastics to metals. None of them have been found successful in high stress severe environment situations such as imposed by thin walled high energy projectiles.

U.S. Patent No. 4,092,377 discloses a method of producing a plastics body with a surface coating of a metal, the method including the use of a cellular plastic material with a retarder which inhibits the adhesion until the cellular material has expanded. U.S. Patent No. 4,097,353 discloses a method of forming a porous coating by spraying bond particles onto an electrode surface and impregnating the porous layer with an aqueous dispersion of very fine particles. U.S. Patent No. 3,352,955 teaches a method for bonding a polyurethane plastics to a metal surface by coating the metal with a glycidyl polyether. U.S. Patent No. 3,763,298 discloses a method of bonding polyethylene to a surface of a metal article comprising a plating or coating of lead peroxide. U.S. Patent No. 4,075,392 discloses a nickel based alloy which is coated on a ferrous metal to provide increased resistance to heat and corrosion. U.S. Patent No. 3,961,098 discloses a corrosion coating formed on a metal surface by a plasma spray of heated metallic particles including a filler metal of aluminium and an alloy of aluminium.

FR—A—1 508 851, upon which the preamble of claim 1 is based, discloses a process for providing a durable, adherent coating of a fluorocarbon resin, in particular PTFE, on a metal base, for instance of iron or an iron alloy. The process for bonding a body of plastics material to a metal base comprises cleaning a surface to be coated, coating the surface with a metallic coating applied by a plasma spray process, applying a thermoplastic polymer in liquid form to said metallic coating, and allowing the polymer to harden to form the body of plastics material.

None of these references directly address the problem of bonding a plastics body to a thin walled steel projectile.

The process of the present invention is characterised in that:

the surface to be coated is a recess formed in the metal base by machining;

the metallic coating is applied to a thickness of 0.076 mm to 0.305 mm; and

prior to the application of the thermoplastic polymer, the metallic coating is primed with a primer comprising a polymer dissolved in a solvent and the primer is dried to evaporate the solvent.

Preferred features of the process of the present invention are specified in the dependent claims.

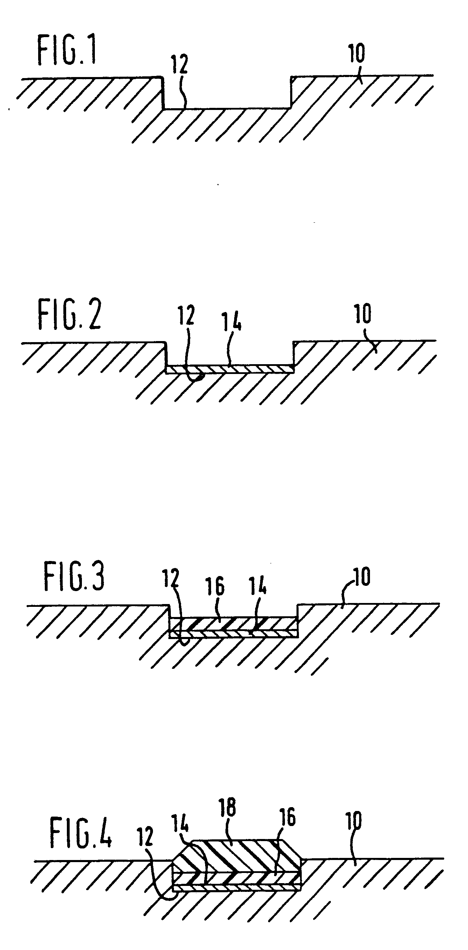

For a more complete understanding of the invention, reference is hereby made to the drawings in which Figures 1 to 4 are cross-sections of part of a projectile body during treatment steps according to a method of the present invention.

As shown in Figure 1, the projectile has an annular recess or seat 12 machined into a steel body 10 of the projectile. For a typical 30 millimeter (mm) projectile, the seat depth is approximately 0.51 mm. After forming the seat is prepared for the next step by degreasing and grit blasting.

Many metallic products are conventionally vapour degreased to remove surface contamination, machining oils, and handling residues. The seat 12 is grit blasted by conventional means to roughen the substrate steel surface, and during grit blasting, areas beyond the seat are protected by a metal mask.

The next step in the present method comprises the coating of the surface of seat 12 with a plasma flame sprayed metallic coating 14, shown in Figure 2. Conveniently, the projectile or spray is rotated during the spraying operation and the metal coating is sprayed onto the seat in layers of the 0.051 to .127 mm until the desired thickness is achieved. The thickness may range from less than 0.076 mm to more than 0.305 mm but it is preferred that the sprayed metallic coating has a thickness ranging from about 0.127 mm to 0.203 mm.

Nickel is a preferred metal for plasma flame spray coating of the projectile annular seat. Antoher preferred metallic coating is Metco P-444 which is an alloy including chromium, aluminum, molybdenum, iron and nickel. It is desirable that the resulting surface be rough and abrasive, such as at least 500 microinches AA.

The next step includes coating the metallic coated seat with a primer comprising a plastics polymer disolved in a solvent, and drying the primer to evaporate the solvent. As shown in Figure 3, the primer coating 16 is applied directly to the metallic coating 14 in the seat 12 of the projectile wall 10. Prior to priming, the projectile is vapour degreased to remove handling residue and to insure a contaminant free surface. The clean surface is then impregnated by brushing on a liquid primer. In a preferred embodiment, the primer is comprised of about 1 part by weight of a polymer such as polyethersulfone and 3 parts by weight of solvent. The solvent was a mixture by volume of 1 part acetone and 3 parts of 1-methyl-2-pyrrolidinone.

The amount of solvent may range from 1 part polymer to 5 parts solvent to about 1 part polymer and 1 part solvent, with about 1 part polymer and 3 parts solvent being preferred. Other suitable polymers are polysulfones, polycarbonates, nylon, and other polyamides.

The freshly primed seat coating is then allowed to dry. Air drying for an hour or more may be then followed by an oven bake to evaporate the carrier solvents and to flow the primer into the porous metal coating. In a preferred embodiment, the temperature profile of the drying step involves a sequential drying of approximately 1 hour at room temperature, 30 minutes at approximately 162°C, 20 minutes at approximately 204°C, and 15 minutes at approximately 287°C. At this point in time, the primer solvent has evaporated and the remaining polymer has bonded to and flowed within the porous metal coating.

Finally, plastics layer 18 is injection molded onto the primer 16 and metallic coating 14 in the seat 12 of the projectile 10 as shown in Figure 4. In a preferred embodiment, prior to the molding of the layer 18, the projectile is induction heated to a temperature sufficiently high to melt the remaining polymer primer but not sufficient to vaporize the polymer. Preferably, this temperature may range from about 204°C to about 370°C and preferably from 300°C to 330°C. Th hot projectile is then placed into a mold and the plastics layer 18 is then molded onto the primed metal coated seat. After removal from the mold, the projectile is permitted to stand undisturbed for approximately 24 hours to allow relaxation of the normally occurring molding stresses within the plastics layer. If desired, the plastics layer, which may be of a polymeric material such as polyethersulfone, may be annealed at a temperature approximating the melting point of the polymeric material; for polyethersulfone, an annealing cycle of 18 hours at approximately 185°C to 204°C may be employed for a period of approximately 18 hours to 2 days.

A plurality of projectiles made according to the above method were stored at various temperatures and humidity conditions which were known to be adverse storage conditions. A number of rounds were then fired at conventional velocities without any failures. For example, a 30 millimeter projectile was fired at 1402 metres/second, and several 25 millimeter projectiles were fired at 1585 metres/second and 1615 metres/second with total retention of the rotating band, at temperatures ranging from −54°C to 74°C, thus demonstrating the successful boding of the plastic to metal.

## Claims

1. A process for bonding a body of plastics material to a metal base comprising:
   cleaning a surface (12) to be coated;
   coating the surface (12) with a metallic coating (14) applied by a plasma spray process;
   applying a thermoplastic polymer (18) in liquid form to said metallic surface; and
   allowing the polymer to harden to form the body of plastics material,
   characterised in that:
   the surface to be coated is a recess (12) formed in the metal base (10) by machining;
   the metallic coating (14) is applied in a thickness from 0.076 mm to 0.305 mm; and
   prior to the application of the thermoplastic polymer (18), the metallic coating (14) is primed with a primer comprising a polymer (16) dissolved in a solvent and the primer is dried to evaporate the solvent.

2. The method of claim 1, wherein the metallic coating (14) ranges in thickness from 0.127 mm to 0.203 mm.

3. The method of claim 1 or claim 2 wherein the ratio of primer polymer (16) to solvent ranges from 1:5 to 1:1 by weight.

4. The method of claim 3, wherein the ratio is 1:3.

5. The method of any one of claims 1 to 4, wherein the metal (10, 14) is heated to a temperature sufficient to melt but not vaporize said primer polymer (16) prior to said thermoplastic polymer (18) applying step.

6. The method of claim 5, wherein the metal (10, 14) is heated to a temperature in the range from 204° to 370°C.

7. The method of Claim 6, wherein the temperature is in the range 300°C to 330°C.

8. The method of any one of Claims 1 to 7 wherein the plastics body (18) is annealed at a temperature of up to 204°C for up to 2 days.

## Patentansprüche

1. Verfahren zum Befestigen eines Kunststoffkörpers an Metall, bestehend aus
   Reinigen der zu beschichtenden Oberfläche (12)
   Beschichten der Oberfläche (12) mit einer Metallschicht (14) durch Plasmaaufsprühen;
   Aufbringen eines thermoplastischen Polymers (18) in flüssiger Form auf die Metallfläche; und
   Aushärten des Polymers zwecks Bildung des Kunststoffkörpers,
   dadurch gekennzeichnet, daß die zu beschichtende Oberfläche eine durch maschinelle Bearbeitung erzeugte Ausnehmung (12) im Metall (10) ist; die metallische Beschichtung (14) mit einer Dicke zwischen 0,076 mm und 0,305 mm aufgebracht wird; und
   vor dem Aufbringen des thermoplastischen Polymers die metallische Beschichtung (14) mit einem Grundiermittel (16) grundiert wird, das aus einem in einem Lösungsmittel gelösten Polymer (16) besteht, und daß das Grundiermittel zwecks Verdampfung des Lösungsmittels getrocknet wird.

2. Verfahren nach Anspruch 1, bei dem die metallische Beschichtung (14) eine Dicke zwischen 0,127 mm und 0,203 mm hat.

3. Verfahren nach Anspruch 1 oder 2, bei dem das Gewichtsverhältnis des Grundiermittelpolymers (16) zum Lösungsmittel im Bereich zwischen 1:5 und 1:1 liegt.

4. Verfahren nach Anspruch 3, bei dem das Verhältnis 1:3 beträgt.

5. Verfahren nach einem der Ansprüche 1 bis 4, bei dem vor dem Aufbringen des thermoplastischen Polymers (108) das Metall (10, 14) auf eine Temperatur aufgeheizt wird, welche zwar zum Schmelzen aber nicht zum Verdampfen des Grundiermittel-Polymers (16) ausreicht.

6. Verfahren nach Anspruch 5, bei dem das Metall (10, 14) auf eine Temperatur im Bereich zwischen 204°C und 370°C aufgeheizt wird.

7. Verfahren nach Anspruch 6, bei dem die Temperatur zwischen 300°C und 330°C liegt.

8. Verfahren nach einem der Ansprüche 1 bis 7, bei dem der Kunstsoffkörper (18) bei einer Temperatur bis zu 200°C für bis zu zwei Tage getempert wird.

## Revendications

1. Procédé de liaison d'un corps de matière plastique à une base métallique comprenant:

le nettoyage d'une surface (12) à revêtir;

le revêtement de la surface (12) avec un revêtement métallique (14) appliqué par un procédé de pulvérisation en plasma;

l'application d'une couche polymère thermoplastique (18) sous forme liquide à ladite surface métallique; et

la licence laissée au polymère de se durcir pour former le corps de matière plastique,

caractérisé en ce que:

la surface à revêtir est un évidement (12) formé dans la base métallique (10) par usinage;

le revêtement métallique (14) est appliqué en une épaisseur allant de 0,076 mm à 0,305 mm; et

avant l'application du polymère thermoplastique (18), le revêtement métallique (14) reçoit un apprêt comprenant un polymère (16) dissous dans un solvant et l'apprêt est séché pour faire évaporer le solvant.

2. Procédé de la revendication 1, dans lequel le revêtement métallique (14) a une épaisseur se situant entre 0,127 mm et 0.203 mm.

3. Procédé selon la revendication 1 ou la revendication 2, dans lequel le rapport du polymère d'apprêt (16) au solvant s'établit entre 1:5 et 1:1 en poids.

4. Procédé de la revendication 3, dans lequel le rapport est de 1:3.

5. Procédé de l'une quelconque des revendications 1 à 4, dans lequel le métal (10, 14) est chauffé à une température suffisante pour fondre mais non pour vaporiser ledit polymère d'apprêt (16) avant l'étape d'application dudit polymère thermoplastique (18).

6. Procédé de la revendication 5, dans lequel le métal (10, 14) est chauffé à une température située dans un intervalle allant de 204°C à 370°C.

7. Procédé de la revendication 6, dans lequel la température se situe dans un intervalle allant de 300°C à 330°C.

8. Procédé selon l'une quelconque des revendications 1 à 7, dans lequel on recuit le corps de matière plastique (18) à une température allant jusqu'à 204°C pendant un durée allant jusqu'à deux jours.

FIG.1

12    10

FIG.2

12    14    10

FIG.3

12    16    14    10

FIG.4    12    14    18    16    10